# EUROPEAN PATENT APPLICATION

(11) **EP 4 541 185 A1**
(43) Date of publication of application: **23.04.2025**
(21) Application number: 24206596.9
(22) Date of filing: 15.10.2024
(51) Int. Cl.: A01M 29/32

(54) **ANTI-INTRUSION REPELLING DEVICE FOR WINGED ANIMALS**

(30) Priority: 20.10.2023 IT 202300021957
(71) Applicant: O.S.D. Gruppo Ecotech S.R.L., 41011 Campogalliano (Modena) (IT)
(72) Inventor: GAIBOTTI, Paolo, 41011 CAMPOGALLIANO (MO) (IT)
(74) Representative: Corradini, Corrado

(57) **Abstract**

A repelling device (10) for winged animals is described, comprising:
- a support base (15), elongated along a longitudinal axis (L) and provided with a first major surface (20) for support and/or attachment to a support surface and an opposing second major surface (25);
- a plurality of rod-like elements (45), each of which has at least one linear section (50) elongated along its own longitudinal axis, said rod-like elements (45) being adapted to be associated with the support base (15) in such a manner that said linear section (50) projects beyond at least one side of the support base (15) and is arranged with its longitudinal axis parallel to the second major surface (25) and transverse to said longitudinal axis (L) of the support base (15);
- a plurality of pairs of arched appendages (60) formed in the support base (15), each pair of which generally defines a channel (85) within which a respective linear section (50) is adapted to be accommodated, wherein the appendages (60) of the same pair are facing in opposite directions to each other, the appendages (60) of the same pair being also spaced apart from each other along a direction parallel to the second major surface (25) and transverse to the longitudinal axis (L) of the support base (15).

## Description

### TECHNICAL FIELD

The present invention relates to the field of repelling devices for winged animals, i.e. those devices designed to prevent birds in general from gaining access to recesses or cavities in general where they otherwise tend to stop and nest or otherwise rest on surfaces.

In particular, the present invention concerns a repelling device that can be used with an anti-intrusion function.

### PRIOR ART

Anti-intrusion repelling devices for winged animals are known, which are adapted to stop them from entering recesses or crevices or cavities in general, preventing them from resting and/or nesting there.

This problem is particularly acute with regard to the gaps that form in buildings, both domestic and commercial, at shutters or more generally in the roof area, particularly in the gap or crevice that forms between the structure supporting photovoltaic panels and the roof covering itself.

Such repelling devices generally comprise a support base that is fixed at said cavity or crevice, and a plurality of rod-like elements that are associated in a removable or fixed manner with the support base so as to protrude from one side of it, defining a barrier that prevents access to the crevice.

Each rod-like element is essentially U-shaped, i.e. it comprises two opposing and essentially parallel straight linear sections and a connecting section between the straight linear sections that is essentially squared with them.

In order to associate the rod-like elements with the support base, the support base is provided with a plurality of pairs of through slots within each of which a respective straight section of the rod-like element can be slidably inserted.

Therefore, the rod-like elements are substantially associated with the support base by making them translate to fit the linear sections into the slots.

A known drawback in the industry is that the assembly of such an anti-intrusion device is slow and awkward, as it is necessary to centre each through-hole with the respective straight section of the rod-like element, and to repeat this operation for all the necessary rod-like elements.

Disassembly is also slow.

It is an object of the present invention to resolve said drawback of the known technique within the scope of a simple, rational and affordable solution.

Such object is achieved by the features of the invention reported in the independent claim. The dependent claims outline preferred and/or particularly advantageous aspects of the invention.

### DISCLOSURE OF THE INVENTION

The invention, in particular, makes available a repelling device (e.g. particularly with an anti-intrusion function) for winged animals comprising:
- a support base, elongated along a longitudinal axis and provided with a first major surface for support and/or attachment to a support surface (or wall) (e.g. particularly to a vertical support surface or inclined with respect to the vertical by an acute angle) and an opposing second major surface;
- a plurality of rod-like elements, each of which has at least one linear section (wherein linear means straight) elongated along its own longitudinal axis, said rod-like elements being adapted to be associated with the support base so that said linear section projects beyond at least one side of the support base (i.e., projecting beyond the support base at least in one direction along a direction substantially parallel to the second major surface and transversal e.g. orthogonal, to the longitudinal axis of the support base itself, i.e. projecting beyond a major side of the second major surface) and arranged with its longitudinal axis parallel to the second major surface and transverse to said longitudinal axis of the support base;
- a plurality of pairs of arched appendages formed in the support base (and rising from the second major surface thereof), each pair of which generally defines a channel within which a respective linear section is adapted to be accommodated, wherein the appendages of the same pair are oriented in opposite directions to each other (e.g., oriented symmetrically to each other with respect to a direction parallel to the second major surface and transverse to the longitudinal axis of the support base or e.g. oriented symmetrically to each other with respect to a plane orthogonal to the second major surface and orthogonal to the longitudinal axis of the support base), the appendages of the same pair being also spaced (by a non-zero distance) from each other along a direction parallel to the second major surface and transverse to the longitudinal axis of the support base.

Thanks to this solution, the invention makes available a repelling device, e.g. particularly with an anti-intrusion function, wherein the rod-like elements can be coupled to and removed from the support base quickly and conveniently.

In particular, thanks to the presence of such appendages and to their arrangement, the linear section of the rod-like element can first be arranged in such a way as to face on one side a lateral access opening to a through recess or cavity defined by one appendage and on the other side a lateral access opening to the through recess or cavity defined by the other appendage of the same pair, and subsequently rotated so as to be inserted into each through recess thus being circumferentially embraced by each of the appendages of said pair, i.e. inserted into the channel generally defined by the through recesses of the appendages of a pair.

This also makes it possible to use rod-like elements with more variedly shaped extremities, e.g. shaped in particular so as not to injure the winged animals.

In fact, unlike the rod-like elements of the prior art, which must necessarily have pointed or truncated extremities in order to be inserted into the slots, thanks to this insertion by rotation, each extremity can be shaped as preferred, particularly it can be curved or otherwise shaped in such a way as not to injure the winged animal that might hit it.

In particular, one aspect of the invention provides that each extremity of the repelling device may have a curved shape.

Therefore, according to the invention, the linear section can be inserted into the channel defined by a respective pair of appendages by rotation about a transverse axis, e.g. substantially orthogonal, to the second major surface of the support base.

A further aspect of the invention provides that the repelling (anti-intrusion) device may comprise a plurality of pairs of plugs, each pair of which is configured to prevent the exit by rotation, with respect to an axis of rotation orthogonal to the second major surface, of the linear section from the channel defined by a respective pair of appendages.

Thanks to this solution, the repelling device is particularly robust and effective in use.

In particular, should the winged animal attempt to dislodge the linear sections of the rod-like elements by attempting to force its way in through two linear sections placed side by side (with respect to the longitudinal extension of the support base), these would be retained by the plugs, preventing the winged animal from pulling apart the linear sections and creating an access opening.

Preferably, each plug can be in the form of a wedge whose tip is pointing in the opposite direction to the respective pair of appendages.

A further aspect of the invention provides that said linear section can be placed to size between the plugs of a pair, or at most with reduced clearance.

Thanks to this solution, the rod-like element associated with the support base is even more stable.

Yet, another aspect of the invention provides that the frictional force between the rod-like element and the support base may be lower than the weight force of the rod-like element when the second major surface is arranged vertically, i.e. parallel to the vertical or inclined with respect to the vertical by an angle lower than 45°, for example lower than or equal to 30°.

Thanks to this solution, when the anti-intrusion device is placed in use with the support base resting on and possibly fixed to the support surface or wall with a vertical orientation, or in any case inclined with respect to the vertical by an angle lower than 45° (e.g. lower than or equal to 30°), the rod-like elements can automatically, by gravity, slide along the channel until they come into contact with an abutment surface (made available by the ground or base of the cavity to be occluded) so as to effectively occlude the crevice (cavity or recess) of interest regardless of the conformation of that abutment surface.

In other words, the rod-like elements fixed at the top of the cavity are able to rest on the abutment surface made available by the base or floor of the crevice (cavity or recess), automatically adapting to its conformation.

Thanks to this solution, e.g. particularly in the case where the first major surface of the support base is glued to a support surface (lying on a vertical plane), there is no need for pressure actions on the rod-like element to bring it into position, which could otherwise impair the adhesion of the support base to the support surface.

In particular, an aspect of the invention may provide that all of the rod-like elements of the repelling device may comprise only a linear section, i.e. that may be constituted by a single linear section and two opposing extremities, one at one end of the linear section and one at the opposite end of the linear section.

Thanks to this solution, the repelling device is particularly versatile in adapting to the most varied conformations of the cavity to be occluded.

In particular, thanks to this solution, each linear section assumes its own position independently of all the other linear sections, so that overall, the linear sections are able to adapt to the shape of the abutment surface in a particularly effective and versatile manner.

A further aspect of the invention provides that the linear section of the rod-like element may project beyond both sides of the support base (i.e. on both sides beyond the second major surface, i.e. beyond both opposing major sides of the second major surface, or project beyond the support base in both directions along a direction substantially parallel to the second major face and transverse, e.g. orthogonal, to the longitudinal axis of the support base itself).

Thanks to this solution, the rod-like element is able to perform a dual function at the same time.

In fact, projecting from one side it occludes access to the cavity or recess of interest, while projecting from the other side dissuades the winged animal from resting above the support surface on which the support base rests and is possibly fixed.

Yet, another aspect of the invention provides that the repelling device may comprise at least one rod-like element presenting (e.g. formed by) a single linear section and two extremities at the ends of said linear section each of which is curved or rounded, e.g. shaped like a hook.

Another aspect of the invention provides that the repelling device may comprise at least one rod-like element presenting (e.g. formed by) a pair of parallel straight linear sections connected by a connecting section, and a pair of extremities each at the end of a respective linear section and curved or rounded, e.g. substantially hook-shaped.

Each extremity of the rod-like element is configured to stop the linear section (along a direction parallel to its longitudinal axis) from slipping out of the channel made available by the appendages as a whole.

In particular, each extremity of the rod-like element is of such a size that it cannot fit and slide (translate) into the through recess (along a direction parallel to the central axis of the through recess) defined by each appendage of the pair, or of such a size that it cannot translate along the overall channel defined by the appendages of a pair.

A further aspect of the invention provides that each appendage may (be adapted to, i.e. be configured to) perimetrically embrace (where perimetrically embrace may be understood to mean to surround in contact or not, e.g. only partially in contact) the linear section for a circumferential arc subtended by an angle greater than 90° and lower than 135°, e.g. substantially equal to 105°.

Thanks to this solution, the association of the repelling device with the support base is particularly effective, as the straight section is embraced for such a circumferential section that it is effectively retained.

Another aspect of the invention provides that each appendage may be at least partially elastically deformable, and that each rod-like element may be inserted into the channel defined overall by the appendages of a pair by elastic deformation of each of said appendages.

Thanks to this solution, the repelling device is particularly effective.

In particular, thanks to this solution, the association between the rod-like elements and the support base is particularly strong and stable.

Furthermore, a further aspect of the invention provides that each appendage may have a first section rising, preferably substantially in a cantilever fashion, from the second major surface of the support base, and a second section deriving (preferably seamlessly) from the first section transversely thereto (or in any case running transversely to the first section), and that the second section may be superimposed in plan on a through slot from the first major surface to the second major surface of the support base.

Thanks to this solution, the support base is realised by means of a particularly rational solution, which makes it possible to limit the amount of material required to make it.

In addition, such slot, i.e. such slots at the appendages of the same pair, make it possible to limit the area of the second major surface in contact with the linear section of the rod-like element so as to minimise the friction between them allowing said linear section to slide easily into the channel defined by the appendages of the pair in order to adapt effectively to the unevenness of the base surface of the cavity or recess to be occluded. Another aspect of the invention provides that the repelling device may comprise at least one locking body, e.g. a plurality of locking bodies each of which is adapted to be associated with two adjacent rod-like sections and configured to prevent them from moving towards/away from each other.

For example, each locking body may be at least partially interposed between two adjacent rod-like sections, in particular at the extension of the latter projecting from the same side of the support base.

According to the invention, said locking body may have a base plate having two opposing major faces of which a first major face and a second major face, and a pair of grasping appendages, each of which is adapted to grasp a respective linear section.

In particular, each grasping appendage can be elastically deformable, and each linear section can be accommodated in a through recess, provided with a side access opening, defined between the grasping appendage and the base plate by means of elastic deformation of the respective grasping appendage.

Thanks to this solution, the linear section is effectively grasped and retained by the respective grasping appendage.

In addition, another aspect of the invention provides that said grasping appendages may be facing in opposite directions to each other, for example arranged mutually symmetrically with respect to a plane orthogonal to the second major face of the base plate and parallel to the central axes of the recesses defined by the grasping appendages.

In particular, the side access openings of the recesses defined by the grasping appendages with the base plate can be facing opposing sides.

Thanks to this solution, on the one hand, the grasping appendages define an obstacle that prevents the rod-like sections from approaching each other, and on the other hand, thanks to the grasping realised thereby (and the elastic force of the grasping appendages), they prevent the rod-like sections from moving away from each other.

A further aspect of the invention provides that the support base may possibly comprise a plurality of locking teeth, adapted to prevent the connecting section of the rod-like elements provided with two linear sections from slipping away from the pairs of appendages in which said linear sections are adapted to be associated.

Thanks to this solution, the repelling device can be arranged vertically, i.e. parallel to the vertical or otherwise inclined with respect to the horizontal, with the linear sections of the rod-like element projecting above the support base to define a barrier that prevents winged animals from resting at an edge, and the rod-like element effectively maintaining its position by means of the locking tooth that creates an obstacle to the sliding of the rod-like element.

Another aspect of the invention provides that the appendages of a pair may be placed at a minimum distance from each other along said direction parallel to the second major surface and transverse to the longitudinal axis of the support base, equal to 3 to 5 times the thickness of the linear section.

Thanks to this proportion between the distance and the thickness of the linear section, its insertion into the channel defined by the appendages is particularly easy.

In particular, it is sufficient to initially position the linear section arranged with its longitudinal axis inclined with respect to a central axis of the channel, i.e. with respect to the central axes of the recesses defined by each of the appendages of the pair, by an acute angle and, subsequently by means of a rotation about a transverse axis (e.g. substantially orthogonal) to the second major surface by an acute angle, insert the linear section into the channel.

This minimal rotational movement makes the operations of insertion and removal from the channel particularly fast.

An independently protectable aspect of the invention makes available a repelling device for winged animals comprising:
- a support base, elongated along a longitudinal axis and provided with a first major surface for support or attachment to a support surface (or wall) and an opposing second major surface;
- a plurality of rod-like elements, each of which has at least one linear (i.e. rectilinear) section elongated along its own longitudinal axis, said rod-like elements (50) being adapted to be associated with the support base in such a manner that said straight linear section projects beyond at least one side of the support base and is arranged with its longitudinal axis parallel to the second major surface and transverse to said longitudinal axis of the support base;
- snap-on means for coupling the rod-like elements to the support base.

With this solution, the invention makes available a repelling device that can be assembled and disassembled particularly quickly and conveniently.

For example, such a repelling device can be configured as described above and said snap-on coupling means can be made available from the pairs of appendages.

The invention further makes available a system comprising:
- a solar or photovoltaic panel, provided with a support frame, and
- a repelling device according to one or more of (for example all) the aspects described above, wherein the first major surface of the support base is placed in support and/or fixed to a support surface made available by the support frame of the solar or photovoltaic panel.

For example, said solar or photovoltaic panel can be placed in support onto a roof cladding by means of the support frame, and the repelling device can be adapted to prevent said winged animals from accessing the gap or cavity that remains defined between the support frame and the roof cladding (or covering) (e.g. roof tiles or shingles).

For example, the repelling device can be fixed to the support frame so that the rod-like elements project beyond it, for example at least below (or eventually both below and above) and for example resting with one extremity on the cladding, so as to define a barrier which prevents the winged animals from getting between the support frame and the cladding.

For example, said support surface made available by the support frame can be vertical or substantially vertical, for example inclined at most by an acute angle (preferably less than 45°) with respect to the vertical.

### BRIEF DESCRIPTION OF THE DRAWINGS

Further features and advantages of the invention will be more apparent after reading the following description provided by way of a non-limiting example, with the aid of the figures illustrated in the accompanying tables.
Figure 1 is a perspective view of a first embodiment of a rod-like element of a repelling device according to the invention.
Figure 2 is a perspective view of a second embodiment of a rod-like element of a repelling device according to the invention.
Figure 3 is a perspective view of a repelling device according to the invention with only some rod-like elements coupled to a support base of the repelling device and an enlargement of a portion of the repelling device in which a pair of appendages and a pair of plugs which allow the coupling of the rod-like element to a support base of the repelling device are better visible.
Figure 4 is a front side lateral view of the repelling device of Figure 3.
Figure 5 is an enlargement of a portion of Figure 4, in which a pair of appendages that together define a channel for accommodating a linear section of a rod-like element and a pair of plugs that contribute with the appendages to holding the linear section in place are better visible.
Figure 6 is a schematic partial view of a repelling device according to the invention applied to a frame structure of photovoltaic panels to occlude access to a compartment that remains defined between said frame and a roof covering.
Figure 7 and Figure 8 show two successive steps of associating the rod-like element with the support base of the repelling device.

### DETAILED DESCRIPTION

With particular reference to these figures, a repelling device for winged animals is indicated overall as 10, i.e. a device that can be particularly used with an anti-intrusion function, or in particular to prevent birds, such as pigeons or doves, from gaining access to recesses or cavities in general where they otherwise tend to stop and nest or in any case to rest on surfaces.

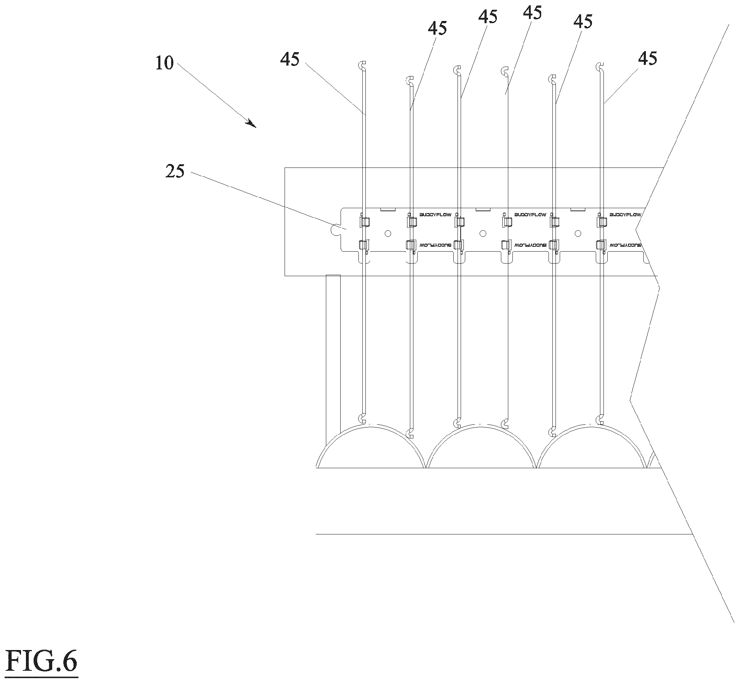

For example, as illustrated in figure 6, the repelling device 10 may be suitable for attachment to a support frame of roof-mounted photovoltaic or solar panels to prevent birds from accessing the gap or cavity that remains defined between the support frame and the roof cladding (e.g. roof tiles or shingles).

At the same time, as can be seen from figure 6, the repelling device 10 can be configured to prevent winged animals from resting at an upper edge of the frame.

The repelling device 10 firstly comprises a support base 15, with an elongated shape along a longitudinal axis L, provided with a substantially flat first major surface 20, for resting and/or attaching the repelling device 10 on a support surface, and an opposing flat second major surface 25.

The first major surface 20 and the second major surface 25 may preferably be substantially parallel to each other.

For example, this first major surface 20 can be covered with a layer of adhesive (material) that allows the support base 15 to be attached to the support surface.

For example, with reference to the view in Figure 6, such a support surface can be substantially vertical, and for example made available by the support frame of the photovoltaic panels.

The support base 15, as can be seen in the attached figures, can basically look like an elongated sheet (along this longitudinal axis L) with reduced thickness, i.e. where the thickness is the smallest dimension of support base 15.

In particular, as can be seen in the figures, the second major surface 25 has two opposing sides which extend along the longitudinal axis L of the support base, and which represent the major sides of the second major surface 25, and two opposing connecting sides which extend transversely (i.e. orthogonally) to the longitudinal axis L of the support base and which define the minor sides of the second surface itself.

Preferably, the support base 15 may have a length along such longitudinal axis L equal to 50 cm.

The support base 15 may comprise a head portion, a tail portion and a plurality of intermediate portions interposed between the head portion and the tail portion (said portions being for example made of a single body).

The intermediate portions may preferably be identical to one another (both in shape and size).

The head portion and the tail portion may differ from the intermediate portions at least in the fact that they have coupling elements which, for example by means of shape coupling, make it possible to connect several support bases together to form a more continuous modular structure.

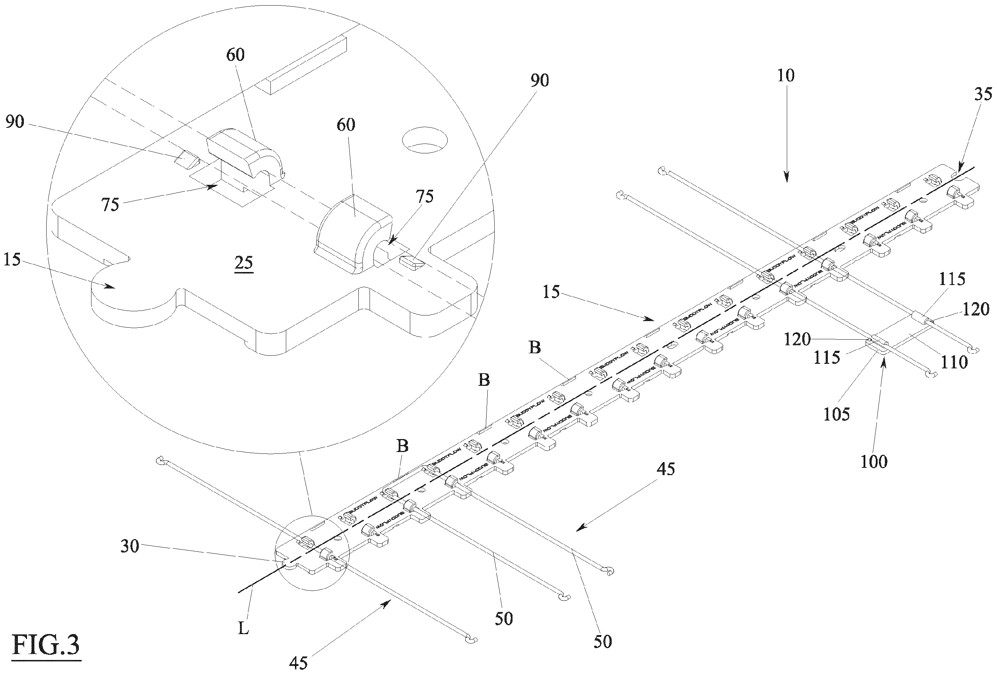

For example, as can be seen in figure 3, the head portion and the tail portion can respectively have a tooth 30 and a seat 35 with a conjugated shape to the tooth, for the coupling respectively with the tail portion and the head portion of further support bases 15, so as to make available overall a modular structure adapted to a larger support surface. Particularly, between one portion and the other, the support base 15 can have notches 40 with a fully transversal extension that extend starting from the first major surface 20 and are closed at the top.

The support base 15 can be created by means of moulding plastic material, preferably by means of the injection moulding of polycarbonate.

The repelling device 10, then, comprises a plurality of rod-like elements 45 (or repelling elements, substantially rod-shaped), which are removably associated with the support base 15.

These rod-like elements 45 (or repelling elements), associated with the support base 15, essentially define a barrier that prevents the winged animal from accessing an area, such as a cavity or recess where the winged animal might otherwise stop and/or nest, or from resting at an edge.

Each rod-like element 45 of the repelling device 10 comprises at least one linear section 50 (where linear means straight) and elongated along its own longitudinal axis.

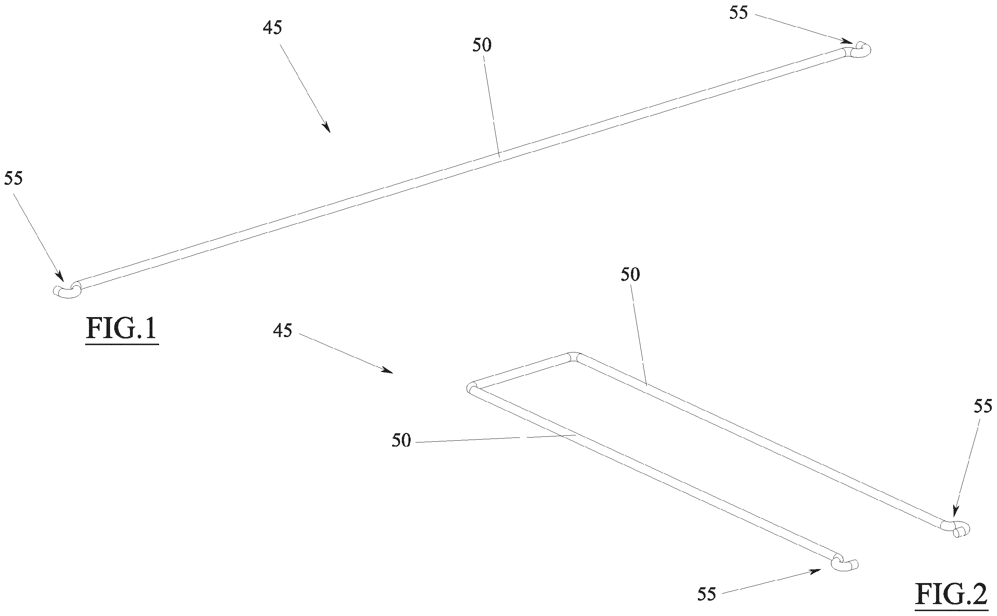

For example, the rod-like element 45 may comprise a single linear section 50 as visible in figure 1 or, as visible in figure 2, it may comprise (only) two linear sections 50, substantially parallel to each other, and connected to each other by a connecting section transverse, for example orthogonal, to said rod-like sections (in which case the rod-like element, or repelling element, as visible in said figure 2 may substantially have the shape of a U-shaped bent rod).

Each rod-like element 45 then comprises two extremities 55 (or portions of extremity), which may be of various shapes, for example one at one end (i.e. which extends, seamlessly, from an end section) of the linear section 50 and one at the other end (i.e. which extends, seamlessly, from the opposite end section) of the linear section 50, with reference to the rod-like element 45 of figure 1, or one at one end (i.e. which extends, seamlessly, from an end section) of one of the rod-like sections 50 and the other at one end (i.e. which extends, seamlessly, from an end section) of the other linear section 50, with reference to the rod-like element 45 of figure 2.

These extremities 55 of the rod-like element 45 may have various shapes, e.g. they may also have a pointed configuration.

Preferably, as visible in the appended figures, (all) said extremities 55 are curved or rounded, in order to avoid injuring the winged animal in any way.

In particular, with reference to the appended figures, said extremities 55 may be curved and, in particular, substantially configured in a C-shape or hook shape.

Preferably, the rod-like element 45 may comprise only said (straight) linear section 50 and said extremities 55 (each at a respective end of the linear section 50) or, alternatively, it may comprise only said two linear sections 50, said connecting section and said two extremities 55 (one at the end of one linear section 50 and one at the end of the other). As mentioned above, each rod-like element 45 is adapted to be associated with the support base 15 in a removable manner.

Preferably, each rod-like element 45 can be removably associated with the support base 15 by means of snap-on coupling means.

As can best be seen in figure 3, the support base 15 comprises a plurality of pairs of arched appendages 60 which are formed in the support base 15, i.e. in a single body with the support base 15, and which rise from the second major surface 25 thereof (i.e. they extend, for example seamlessly, away from the second major surface 25).

These appendages 60 may preferably correspond to each other, i.e. be of the same shape and/or size.

The pairs of appendages are arranged (i.e. formed) on the second major surface 25 so that they are spaced apart from each other by a non-zero distance along the longitudinal axis L of the support base 15.

In other words, the pairs of appendages 60 are formed on the support base 15 in such a way that they are arranged successively one pair after the other along the longitudinal extension thereof, e.g. preferably at regular intervals.

In particular, each appendage 60 is arched.

With arched it is intended that the appendage 60 comprises a first section 65 that rises (i.e. extends away), e.g. seamlessly, from the second major surface 25, substantially squared with it, and a second section 70 that is derived from the first section 65 (and extends) transversely thereto.

For example, the first section 65 and the second section 70 may be connected to each other such that an appendage 60 is defined with the overall shape of an arc of a circumference (subtended at an angle of less than 180°, e.g. preferably lower than 135°, e.g. substantially equal to 105°).

However, it is not excluded that the first section 65 and the second section 70 may be transverse to each other and joined at the tip.

Each appendage 60 defines a through recess or recess 75, provided with a side access opening, within which the linear section 50 is suitable to be accommodated such that it is circumferentially embraced by the appendage 60 itself.

In other words, each appendage 60 defines an essentially half-bridge-like structure. Such recess or recess 75 has a central axis substantially parallel to the second major surface 25 of the support base 15 and transverse, e.g. preferably orthogonal, to the longitudinal axis L of the support base 15.

In detail, the second section 70 of each appendage 60 has a free extremity 55 distal from the first section 65 which is located at a non-zero distance from a lying plane of the second major surface 25 (with respect to a direction orthogonal to the second major surface 25), and this non-zero distance defines the size (height) of the access opening to the recess 75.

In particular, this extremity 55 of the second section 70 of each appendage 60 is preferably placed at a minimum distance (with respect to said orthogonal direction to the second major surface 25) less than a thickness (e.g. diameter) of the linear section 50 of the rod-like element 45.

Again, as can best be seen in figure 3, the second section 70 of each appendage 60 can be superimposed in plan on a respective through slot 80 from the first major surface 20 to the second major surface 25 formed in the support base 15.

Each appendage 60 may be at least partially elastically deformable.

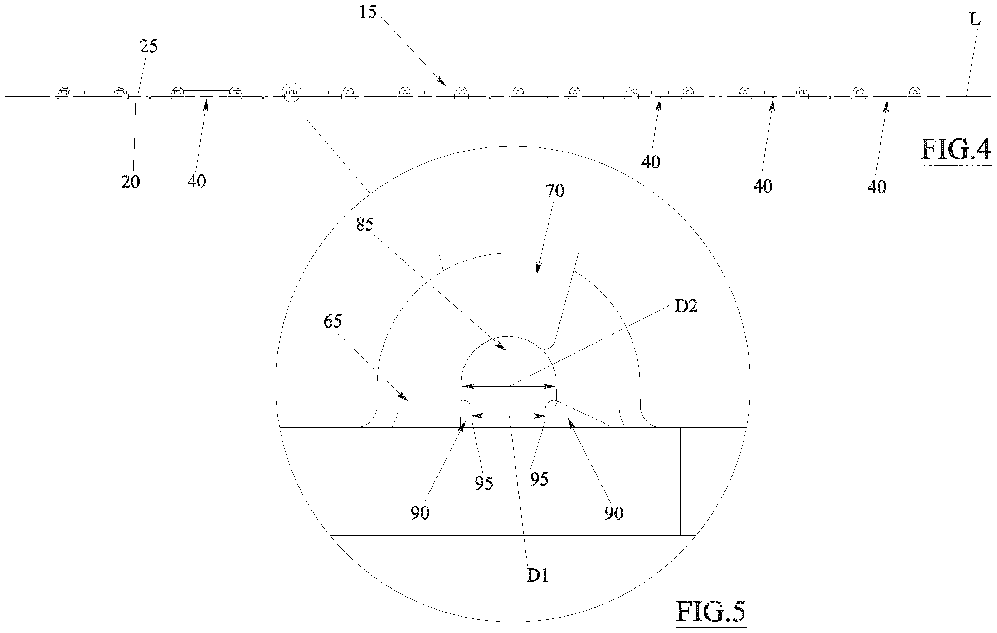

As can be seen better from the enlargement of figure 5, each pair of appendages 60 defines overall a channel 85, made available by the (through) recesses 75 defined by the appendages 60, within which a respective linear section 50 is (adapted to be) accommodated.

In particular, the recesses 75 defined by the appendages 60 of the same pair may have coaxial central axes.

These central axes of the recesses are essentially parallel to the second major surface 25 and transverse, i.e. orthogonal, to the longitudinal axis L of the support base 15.

As can be seen in figures 3 and 5, the appendages 60 of the same pair face in opposite directions to each other.

For example, the appendages 60 of the same pair are arranged so that the access opening of one appendage 60 faces one way along a direction parallel to the longitudinal axis of the support base, while the access opening of the other appendage of a pair faces the opposite way along the same direction (i.e. along a direction parallel to the longitudinal axis of the support base).

For example, the access opening of one appendage 60 faces a minor side of the second major surface 25 while the access opening of the other appendage of the pair faces the opposite minor side of the second major surface 25.

In particular, the appendages 60 of a pair may be oriented symmetrically towards each other with respect to a direction parallel to the second major surface 25 and transverse, e.g. orthogonal, to the longitudinal axis L of the support base 15, or oriented symmetrically towards each other with respect to a plane orthogonal to the second major surface and transverse, e.g. orthogonal, to the longitudinal axis L of the support base 15.

The appendages 60 of the same pair are spaced a non-zero distance apart along said direction parallel to the second major surface 25 and transverse, e.g. orthogonal, to the longitudinal axis L of the support base 15.

In particular, the appendages 60 of a pair may be placed at a minimum distance from each other along said direction parallel to the second major surface 25 and transverse, e.g. orthogonal, to the longitudinal axis L of the support base 15 by a minimum distance at least equal to the encumbrance of one of said appendages 60 along the same direction. For example, the appendages 60 of a pair may be placed at a minimum distance from each other along said direction parallel to the second major surface 25 and transverse, e.g. orthogonal, to the longitudinal axis L of the support base 15 by a minimum distance equal to 1 to 2 times the encumbrance of one of said appendages 60 along said direction, e.g. equal to 1.7 times said footprint.

This minimum distance between the appendages 60 of the same pair, along said direction parallel to the second major surface 25 and transverse (e.g. orthogonal) to the longitudinal axis L of the support base 15, is greater than the thickness (i.e. width, e.g. than the diameter) of the linear section 50 of the rod-like element 45, e.g. particularly equal to 4 to 5 times said thickness (i.e. width, e.g. diameter).

The rod-like element 45 associated with the support base 15 is arranged with said linear section 50 projecting beyond the support base 25, i.e. beyond at least one side of the support base 15, and arranged with its longitudinal axis L substantially parallel to the second major surface 25 and transverse, e.g. orthogonal, to said longitudinal axis L of the support base 15.

In particular, the linear section 50 projects beyond at least one side of the second major surface 25 of the support base 15, i.e. one of the major sides of the second major surface 25.

In other words, the linear section 50 projects beyond the support base 15 in at least one way along a direction substantially parallel to the second major face 25 and transverse, e.g. orthogonal, to the longitudinal axis L of the support base itself.

For example, as can be seen more clearly in figure 3, the linear section 50 can project beyond both opposing sides of the support base 15.

In detail, the linear section 50 can project beyond both sides of the second major surface 25 of the support base 15, i.e. both major sides of the second major surface 25.

In other words, the linear section 50 may project beyond the support base 15 either way along a direction substantially parallel to the second major face 25 and transverse, e.g. orthogonal, to the longitudinal axis L of the support base itself.

In particular, said linear section 50 can be inserted into the channel 85 defined by the appendages 60 of the same pair, by means of elastic deformation thereof.

In more detail, the linear section 50 of the rod-like element 45 can be inserted into each recess 75 defined by the appendages 60 of a pair by elastic deformation of each of said appendages 60.

In this way, the appendages 60 of a pair can define snap-on coupling means for retaining the linear section 50 within the channel 85 (i.e. each recess 75) defined by the appendages 60 themselves.

In particular, each appendage 60 of the same pair perimetrically embraces (i.e. surrounds) the linear section 50 by an arc of a circumference subtended by an angle at least equal to 90°, e.g. subtended by an angle greater than 90° and lower than 135°, e.g. substantially equal to 105°.

The linear section 50, inserted into the channel 85 defined by the appendages 60 of a respective pair, may thus be circumferentially embraced (i.e. surrounded) for an arc of a circumference subtended by an angle equal to at least 180°.

As can best be seen in the enlargement of figure 3 or the enlargement of figure 5, the repelling device 10 further comprises a plurality of pairs of plugs 90 formed in the support base 15, each of which rises from the second major surface 25 (i.e., extends from the second major surface 25 in a direction away from the major surfaces 20,25 of the support base 15).

Each pair of plugs 90 is formed at a respective pair of appendages 60 and configured to prevent the exit by rotation, with respect to an axis of rotation transverse (e.g. substantially orthogonal) to the second major surface 25 of the support base 15, of the linear section 50 from the channel 85 defined by said respective pair of appendages 60.

In particular, each plug 90 makes available an abutment surface 95 adapted to contact the linear section 50 when it is inserted into the channel 85 defined by the respective pair of appendages 60.

Each pair of plugs 90 comprises a plug 90 proximal to one of the appendages 60 and a plug 90 proximal to the other of the appendages 60 of the respective pair of appendages. In particular, the abutment surfaces of the plugs 90 of a pair can be substantially parallel to each other.

In addition, the plugs 90 of a pair may be placed at a minimum distance from each other along said direction parallel to the first major surface 20 and transverse, e.g. orthogonal, to the longitudinal axis L of the support base 15 greater than the distance (along the same direction) between the appendages 60 of a pair.

Again, as be seen more clearly in the enlargement of figure 5, the abutment plugs 90 of the same pair are placed at a minimum distance D1, along a direction parallel to the second major surface 25 and the longitudinal axis L of the support base 15, lower than the minimum distance D2 along the same direction between the first sections 65 of the respective pair of appendages 60.

In particular, this minimum distance D1 between the abutment plugs 90 is defined by the distance along said direction between the abutment surfaces 95 thereof, and may be substantially equal to the thickness (or width, i.e. diameter) of the linear section 50 of the rod-like element 45, or at the most greater than said thickness (or width, i.e. diameter) by an amount lower than one millimetre (mm), for example by an amount substantially equal to one or two tenths of a millimetre.

In other words, the linear section 50 of the rod-like element 45, when associated with the support base 15, is interposed between the plugs 90 of a pair that is substantially to size (or at most with reduced clearance, e.g. a clearance of less than 1 mm).

The frictional force between the rod-like element 45 and the support base 15, when this is associated with the support base 15 (i.e. when each linear section 50 of the rod-like element 45 is accommodated in the channel 85 defined by a respective pair of appendages 60 and interposed between the respective pair of plugs 90), may be less than the weight force of the rod-like element 45 when the second major surface 25 is arranged vertically, i.e. parallel to the vertical or otherwise inclined with respect to the vertical by an angle of less than 45°, for example lower than or equal to 30°.

In particular, it is possible to envisage that said rod-like element 45 may be surface polished in order to minimise said friction with the support base 15 when it is associated with it.

As can be seen in figure 3, the support base 15 may optionally comprise a plurality of locking teeth B, adapted to prevent the sliding of the connecting section of the rod-like elements 45 provided with two linear sections 50 away from the pairs of appendages 60 in which said linear sections 50 are adapted to be associated.

Each locking tooth B rises from the second major surface 25 and is preferably formed equidistant from two pairs of consecutive appendages 60.

The rod-like element 45 with two linear sections 50 can then be associated with the support base 15, with each linear section 50 inserted into the channel 85 defined by a respective pair of appendages 60 and, if necessary, with the connecting section placed in abutment on a respective locking tooth B (as, for example, shown in figure 3).

As visible in said figure 3, the repelling device 10 may also comprise one or more locking bodies 100 (e.g. each of which is made in a separate body from the support base 15), each of which is adapted to be associated with two adjacent linear sections 50 (along the longitudinal axis of the support base 15) and configured to prevent them from moving towards or away from each other.

In particular, as can be seen from figure 3, each locking body 100 is associated with said adjacent rod-like sections 50 at the extension thereof that projects from the same side (e.g. from the same major side of the second major surface 25) of the support base 15, and preferably in the vicinity of the extremities 55.

In detail, each locking body 100 is preferably (at least partially) interposed between two adjacent linear sections 50 in the vicinity of the respective extremities 55.

In particular, each locking body 100 comprises a base plate 105, with a reduced thickness (i.e. where the thickness is the minor dimension) and having two opposing major faces of which a first major face and a second major face 110 (where the major faces are preferably substantially parallel to each other).

Preferably, such a base plate 105 may have a thickness (understood as the distance between the major faces in the direction orthogonal thereto) lower than or equal to the thickness of the support base 15.

Each locking body 100 then has two respective grasping appendages 115, each of which is derived from the second major face 110 of the base plate 105 moving away from the base plate 105 itself.

Each grasping appendage 115 is preferably arched.

With arched it is intended that the grasping appendage 115 comprises a first section rising, e.g. seamlessly, from the second major face 110 substantially squared with it, and a second section deriving from the first section transverse thereto and superimposed in plan on the base plate 105.

For example, the first section and the second section may be connected to each other in order to define a grasping appendage 115 presenting overall the shape of an arc of a circumference (subtended at an angle of less than 180°, e.g. preferably lower than 135°). However, it is not excluded that the first section and the second section may be mutually transverse and joined at the tip.

Each grasping appendage 115 defines a respective through recess, provided with a side access opening, within which a linear section 50 is adapted to be accommodated such that it is circumferentially embraced (i.e. surrounded) by the grasping appendage 115 itself.

The second section of each grasping appendage 115 has a free end distal from the first section which is located at a non-zero distance from a lying plane of the second major face 110 (with respect to a direction orthogonal to the second major face 110).

In particular, this end of the second section of each grasping appendage 115 is preferably placed at a minimum distance (with respect to said orthogonal direction to the second major surface 25) lower than the thickness (i.e. width, e.g. diameter) of the linear section 50 of the rod-like element 45.

Each of the grasping appendages 115 is at least partially elastically deformable.

In addition, the grasping appendages 115 of the locking body 100 are oriented in opposite directions to each other, i.e. on opposite sides to each other.

For example, the grasping appendages 115 may be arranged symmetrically to each other with respect to a median plane of the locking body 100 orthogonal to the major faces thereof and parallel to the central axes of the through recesses defined by the grasping appendages 115.

Furthermore, said access openings to the recess are preferably facing away from each other.

Each locking body 100 is then associated with two adjacent rod-like sections 50, so that each linear section 50 is inserted into the through recess defined by a respective grasping appendage 115, in particular by means of elastic deformation thereof.

In particular, due to this symmetrical arrangement of the grasping appendages 115 it is particularly easy to insert the linear sections 50 each inside the recess defined by a respective grasping appendage 115, for example by simply pushing the linear sections together with two fingers.

Each locking body 100 may also have a pair of locking plugs, each of which rises from the second major face.

Each locking plug 120 is configured to prevent the exit by rotation, with respect to a transverse axis of rotation (e.g. substantially orthogonal) to the second major face of the base plate 110, of the linear section 50 from the recess defined by a respective grasping appendage 115.

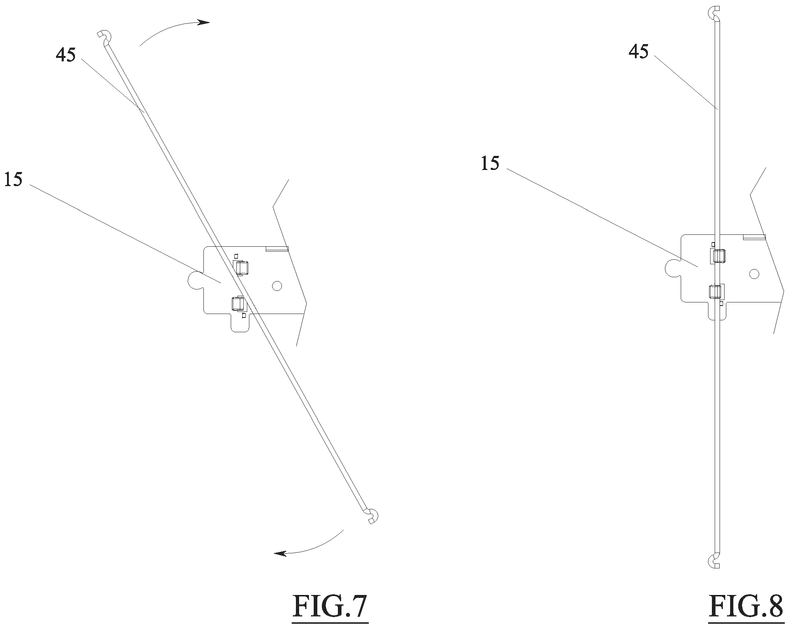

With particular reference to figures 7 and 8, the linear section 50 of a rod-like element 45 can be associated with the support base 15 as follows.

The linear section 50 is first arranged so as to face (at a non-zero distance) the access openings defined by the appendages of a respective pair, and with its longitudinal axis arranged substantially parallel to the second major surface 25 and transverse to the central axes of the recesses defined by the appendages themselves.

Subsequently, the linear section 45 is rotated, e.g. clockwise, so that it is inserted into each through recess, and so that it is inserted overall into the channel 85 defined by the pair of appendages 60.

In particular, during said rotation the linear section 45 first encounters the free end of each second section of each appendage 60 of the pair, and, pressing on said free ends, by means of elastic deformation of the appendages 60, each of which will thus be in a deformed configuration, moves said free ends away from the second major surface 25 (substantially enlarging the height of the lateral access opening to the through recess and) thus being inserted into the channel 85, i.e. inside each through cavity (or recess). Once inserted, each appendage will move elastically back towards (and possibly into) the undeformed configuration (i.e. towards and possibly into the configuration in which the free end of the second section is at a distance from the second major surface 25 less than the thickness of the linear section 45).

Once inserted into the channel 85, the linear section 50 is also interposed between the plugs 90 of a pair of plugs associated with the respective pair of appendages 60 (i.e. formed proximal thereto).

The invention thus conceived is susceptible to many modifications and variants, all falling within the same inventive concept.

Moreover, all details may be replaced by other technically equivalent elements.

In practice, the materials used, as well as the contingent shapes and sizes, may be whatever according to the requirements without for this reason departing from the scope of protection of the following claims.

## Claims

1. Repelling device (10) for winged animals comprising:
- a support base (15), elongated along a longitudinal axis (L) and provided with a first major surface (20) for support and/or attachment to a support surface and an opposing second major surface (25);
- a plurality of rod-like elements (45), each of which has at least one linear section (50) elongated along its own longitudinal axis, said rod-like elements (45) being adapted to be associated with the support base (15) in such a manner that said linear section (50) projects beyond at least one side of the support base (15) and is arranged with its longitudinal axis parallel to the second major surface (25) and transverse to said longitudinal axis (L) of the support base (15);
- a plurality of pairs of arched appendages (60) formed in the support base (15), each pair of which generally defines a channel (85) within which a respective linear section (50) is adapted to be accommodated, wherein the appendages (60) of the same pair are facing in opposite directions to each other, the appendages (60) of the same pair being also spaced apart from each other along a direction parallel to the second major surface (25) and transverse to the longitudinal axis (L) of the support base (15).

2. The repelling device (10) according to claim 1, wherein the linear section (50) is inserted into the channel (85) defined by the appendages (60) by elastic deformation thereof.

3. The repelling device (10) according to claim 1, further comprising a plurality of pairs of plugs (90), each pair of which is configured to prevent the exit by rotation of the linear section (50) from the channel (85) defined by a respective pair of appendages (60).

4. The repelling device (10) according to claim 1, wherein the frictional force between the rod-like element (45) and the support base (15) is lower than the weight force of the rod-like element (45) when the second major surface (25) is arranged vertically.

5. The repelling device (10) according to claim 1, wherein the linear section (50) of the rod-like element (45) projects beyond both sides of the support base (15).

6. The repelling device (10) according to claim 1, comprising at least one rod-like element (45) having a single linear section (50) and two extremities (55) at the ends of said linear section (50) each of which is curved.

7. The repelling device (10) according to claim 1, comprising at least one locking body adapted to be associated with two adjacent rod-like sections (50) and configured to prevent them from moving away/towards each other.

8. The repelling device (10) according to claim 3, wherein said linear section (50) is interposed between the plugs (90) of a pair.

9. The repelling device (10) according to claim 1, wherein each appendage (60) is designed to perimetrically embrace the linear section (50) for an arc of a circumference subtended by an angle greater than 90° and lower than 135°.

10. The repelling device (10) according to claim 1, wherein each appendage (60) has a first section (65) rising from the second major surface (25) of the support base (15) and a second section (70) deriving from the first section (65) transversely thereto, and wherein the second section (70) is superimposed in plan on a through slot (80) from the first major surface (20) to the second major surface (25) of the support base (15).

11. The repelling device (10) according to claim 1, wherein the appendages (60) of a pair are placed at a minimum distance from each other along said direction parallel to the second major surface (25) and transverse to the longitudinal axis (L) of the support base (15), equal to 3 to 5 times the thickness of the linear section (50).
